# EUROPEAN PATENT SPECIFICATION

(11) **EP 1 811 864 B1**
(45) Date of publication and mention of the grant of the patent: **14.05.2008**
(21) Application number: 04808713.4
(22) Date of filing: 12.11.2004
(51) Int. Cl.: A23L 1/29

(54) **LIQUID TRANSITION NUTRITION FOR INFANTS**
FLÜSSIGE ÜBERGANGSNAHRUNG FÜR KLEINKINDER
ALIMENT DE TRANSITION NUTRITIONNELLE LIQUIDE POUR NOURRISSONS

(43) Date of publication of application: 01.08.2007
(73) Proprietor: N.V. Nutricia, 2712 HM Zoetermeer (NL)
(72) Inventor: SLIWINSKI, Edward, Lucian, NL-5342 EM Oss (NL); VENEMAN, Jan, Michel, NL-2561 VD Den Haag (NL); VREUGDENHIL, Susan, NL-2513 CS Den Haag (NL)
(74) Representative: van Westenbrugge, Andries
(86) International application number: PCT/NL2004/000797
(87) International publication number: WO 2006/052125

(56) References cited:
- WO-A-02/051264
- US-A- 6 099 871

## Description

### FIELD OF THE INVENTION

The present invention relates to the field of liquid, ready-to-eat infant nutrition.

### BACKGROUND OF THE INVENTION

A balanced carbohydrate intake is of crucial important for healthy nutrition. Hence, in the art it is a constant aim to provide optimal carbohydrate compositions.
Reconstituted powdered products are commonly used as a first step towards solid foods. Infants with the age of 4 to 12 months consume reconstituted powdered cereal preparations, such as Nutrix™ and Bambix™(Nutricia B.V., Zoetermeer, The Netherlands).
Microbial contamination of the reconstituted liquid product often occurs due to contamination of the hands, the use of dirty towels, contaminated water or spoiled milk. Hence, the use of ready to use liquid formula is preferred. Additionally, reconstituted powdered products may form so-called "hot spots" when being subjected to microwave-heating. These may injure the infant. A further disadvantage of using reconstituted powdered products is that the viscosity tends to increase for a long period, which makes bottle feeding though a teat virtually impossible after some time. Hence it is highly desirable to manufacture ready-to-use liquid products which can (partially) replace the powdered products. Ready-to-use liquid products with a viscosity in the range of 30-300 cps are described in US6099871.

However, it is difficult to manufacture liquid compositions that can (partially) replace the reconstitutable powdered products, and still have an optimal carbohydrate content, are suitable for feeding through a teat (e.g. do not increase to much in viscosity when heated), are physically stable, microbiologically safe and contain sufficient cereal components. Fpr example, indigestible carbohydrate components often tend to sediment on the bottom. Also, cereal components gelatinize when the liquid compositions are sterilized, increasing the viscosity to unacceptable levels, particularly if the composition is to be bottle-fed to an infant through a teat.

### SUMMARY OF THE INVENTION

The present invention provides a liquid nutritional product, which is particularly suitable for supporting the transition period wherein the infant changes from a diet consisting of breast milk or liquid infant formula to solid foods. The present composition is particularly designed to have the infant accustomed to ingredients present in solid foods, particularly cereal based ingredients. Generally, infants in this transition period are between 4 and 18 months old.

In one aspect the present liquid composition has an increased viscosity vis-à-vis liquid infant formula and/or breast milk. The increased viscosity also provides a step towards solid nutrition. However, the present composition is still sufficiently low in viscosity for bottle-feeding through a teat. Furthermore, the present liquid composition preferably has an increased caloric density compared to human milk and/or liquid infant formula, which is a further step towards solid nutrition. In a further aspect, the present composition has an optimal digestible and indigestible carbohydrate content, while having a long shelf life.

The digestible carbohydrate fraction of the present composition contains relatively small quantities of monosaccharides (if any). A high content of monosaccharides increases the chances for the development of caries. However if honey is included in the present composition, it may contain fairly high amounts of monosaccharides, as honey does not increase the risk of caries despite the presence of monosaccharides therein.

The present composition contains lactose, in order to provide similarity with infant milk formula and/or breast milk. Additional disaccharides in the form of sucrose and/or maltose may be added as sweetener and/or for increasing diversity of ingredients. An increased diversity of ingredients better prepares the infant for consuming solid foods.

The composition contains a significant portion of digestible cereal-derived carbohydrate with medium chain length (i.e. a degree of polymerisation between 3 and 250). These are easily digestible cereal-derived carbohydrates, i.e. a first step up towards more complex carbohydrates. As a full-length carbohydrate, precooked flour and/or precooked starch is included in the composition. The full-length carbohydrates have high resemblance with the carbohydrate component in the future solid foods to be combusted. It is however essential that the present starches and/or flour are precooked for a smooth transition, without intestinal discomfort.

It is also of crucial importance that the present transitional nutrition contains indigestible carbohydrates. Both human milk and many solid foods contain indigestible oligosaccharides. The indigestible oligosaccharide provides significant gastrointestinal and systemic health benefits, e.g. improving moderate constipation and, selectively stimulating the growth of probiotic bacteria. The present composition contains at least a significant amount of indigestible soluble fibers, in order to benefit from the effects.
Optimally, the present composition contains at least two different types of oligosaccharides, e.g. a galactose-based oligosaccharide, which has high resemblance with human milk oligosaccharides, and a fruit, vegetable or cereal-based oligosaccharide. This combination makes a particularly good nutrition for the transitional period.

As still a further improvement, the present liquid composition preferably contains insoluble dietary fiber. The amount of insoluble dietary fiber is preferably below 1 gram per liter in order to prevent intestinal discomfort and provide a product with long shelf life.

The present composition is user-friendly and healthy for the infants and contains a specific combination of ingredients that provides these characteristics. Excluding one or more of the essential ingredients from the present composition significantly reduces the quality of the composition. Hence in one aspect the present composition provides a shelf stable and safe product, which provides benefits to the infant. Particularly the macronutrient components, e.g. the components of the carbohydrate mixture, mutually support each other in the accustomization process of the infant.

### DETAILED DESCRIPTION OF THE PREFERED EMBODIMENTS.

The present invention provides a liquid composition suitable for feeding to an infant with a viscosity of 20-150 mPas containing:
a. a digestible carbohydrate fraction comprising:
   less than 20 wt.% monosaccharide based on total weight of digestible carbohydrate if the composition includes honey or less than 15 wt.% monosaccharide based on total weight of digestible carbohydrate;
   between 20 and 70 wt.% disaccharide based on total weight of digestible carbohydrate, wherein at least 10 wt.% based on total weight of digestible carbohydrate is provided by lactose;
   between 10 and 30 wt.% digestible oligosaccharide with a degree of polymerisation (DP) of 3 - 250;
   between 10 and 40 wt.% precooked material selected from the group consisting of precooked cereal starch and precooked cereal flour, based on total weight of the digestible carbohydrate; and
   a weight ratio lactose/digestible cereal-derived carbohydrate between 0.25 and 2.5; and
b. an indigestible carbohydrate fraction comprising at least 50 wt.% soluble indigestible oligosaccharide with a degree of polymerisation (DP) between 2 and 100.

In a further aspect the present invention provides a process for the manufacture of the composition and the use thereof for providing nutrition to an infant of the age between 4 and 18 months.

In still a further aspect, the present invention provides a process for the manufacture of the present composition, comprising admixing lactose; precooked material selected from the group consisting of precooked cereal starch and precooked cereal flour; digestible oligosaccharide with a degree of polymerisation (DP) of 3 - 250; and indigestible oligosaccharide.

### Digestible carbohydrate fraction

On optimal digestible carbohydrate fraction is of crucial importance in the present nutrition. The present composition provides an optimal blend of digestible di-, oligo-and polysaccharides from different sources, without causing intestinal discomfort for the infant, having good palatability and having a long shelf life. In the present composition, the disaccharides are at least partially provided by lactose; the digestible oligosaccharides have a degree of polymerisation between 3 and 250, and the polysaccharides are provided by precooked cereal flour or precooked cereal starch.

A sufficient amount of digestible carbohydrates is essential for infants. Hence, preferably between 40 and 75 % of total calories of the composition (en%) are provided by carbohydrate.

The present composition comprises a combination of lactose and digestible cereal-derived carbohydrate. The combination of "digestible animal derived carbohydrate" and digestible plant derived carbohydrate supports the transition period. Preferably the weight ratio lactose/digestible cereal derived carbohydrate is between 1 and 10, more preferably between 3 and 6.

### Monosaccharide

Infants in the age of 4 to 18 months generally have their first milk teeth appearing. In order to prevent the formation of dental caries, the present liquid composition preferably contains less than 15 wt.% monosaccharide based on total weight of digestible carbohydrate, preferably below 10 wt.%, most preferably less than 5 wt.%; or, if the composition includes honey, less than 20 wt.% monosaccharide based on total weight of digestible carbohydrate, preferably less than 15 wt.%. Preferably the present liquid composition contains honey.

### Digestible disaccharide

The present liquid composition comprises between 40 and 70 wt.% disaccharide based on total weight of digestible carbohydrate, including at least 10 wt.% lactose based on total weight of digestible carbohydrate , preferably at least 40 wt.% lactose. Preferably the lactose content does not exceed 70 wt.% based on total weight of digestible carbohydrate, preferably does not exceed 60 wt.%. In addition to lactose the present composition may e.g. include sucrose and/or maltose.

Preferably a high content of lactose is included as disaccharide, for a high similarity with milk and for the prevention of tooth decay. The present composition contains lactose and other digestible carbohydrates, i.e. a mixture of carbohydrates normally present in human breast milk and non-breast milk carbohydrates. Optimally, both "other" digestible carbohydrates (digestible carbohydrates minus lactose) as well as lactose are present in about equal amounts. Therefor the weight ratio [lactose]/[digestible carbohydrate other than lactose] is preferably between 0.25 and 2.5.

### Digestible oligosaccharides

The present liquid composition preferably comprises between 10 and 30 wt.% digestible, cereal-derived oligosaccharide with a degree of polymerisation (DP) of 3 to 250 based on total digestible saccharides of the present composition. More preferably, the present liquid composition comprises a fraction of digestible oligosaccharides with a DP of 3-10 (hereinafter referred to as "F-DP3-10") and a fraction of digestible oligosaccharides with a DP of 11-250 (hereinafter referred to as "F-DP11-250"), wherein the weight ratio F-DP3-10/F-DP11-250 is preferably between 0.1 and 10, more preferably between 0.25 and 5.

### Precooked flour/starch

The present composition comprises between 10 and 40 wt.% precooked material selected from the group consisting of precooked cereal starch and precooked cereal flour, preferably between 20 and 40 wt.% precooked material.
The term "precooked starch" and "precooked cereal flour" indicates starch or flour obtained by the process whereby starch or flour, in granular and crystalline structure;
a. is swelled and transformed, preferably in a continuous amorphous phase, in the presence of heat and water;
b. dried (e.g. using drum drying or extrusion cooking); and
c. ground.

In a preferred embodiment precooked cereal flour is used. The precooked cereal flour has a closer resemblance with the ingredients in solid nutrition as it also contains protein. The precooked flour presently used preferably contains between 5 and 15 wt.% protein based on the total dry weight of the precooked flour. Preferably the present composition comprises precooked rice flour. The precooked flour or precooked starch may be obtained from baked cookies.
The use of precooked starch or precooked flour has the further advantage that the final product has a reduced content of thermo-resistant spores compared to the use of non-precooked flour and/or non-precooked starch. Furthermore, the use of precooked starch and/or precooked flour in the present process for has the advantage that the viscosity differences of the composition before and just after sterilization of the composition are minimal. This in contrast to the situation wherein solely non-precooked flour and/or precooked starch is used.
To accustom the infant for a variety of different solid cereal foods, the present composition preferably contains two different precooked cereals (precooked cereal flour or precooked cereal starch) obtained from different plant species, i.e. preferably at least two precooked cereals from a species selected from the group consisting of oat, wheat, corn, rice, rye, barley, spelt, buckwheat, millet, sorghum, triticate and amarant.

The precooked flour or precooked starch used in the present invention preferably has a degree of gelatinization of at least 50%, preferably at least 75 %. This gives better water holding capacity (W.H.C), resulting in an improved product (e.g. stability and palatability). The WHC of the precooked material used in the present invention is preferably between 2 and 10 gram water/gram dry matter precooked material, more preferably between 2.5 and 5 gram water/gram dry matter precooked material. The WHC can be determined as described by Pinnavaia and Pizzirani (Starch/Starke 50 (1998) nr. 2-3, S. 64-67).

### Indigestible carbohydrate fraction

The present composition comprises an indigestible carbohydrate fraction containing soluble indigestible oligosaccharide with a degree of polymerisation (DP) between 2 and 100, preferably a DP between 2 and 50. Indigestible carbohydrates are also referred to dietary fiber. Preferably at least 50 wt.% of the total indigestible carbohydrate fraction is soluble indigestible oligosaccharide, more preferably at least 75 wt.%. The soluble oligosaccharides have the advantage that they provide both health benefits to the infant, and give good product characteristics, e.g. the soluble fibers do not precipitate and hardly react with other ingredients of the present composition. The present composition preferably contains 0.5 to 12 grams of the indigestible soluble oligosaccharides per 100 gram dry weight of the liquid composition, preferably between 0.5 and 8 grams, more preferably between 1.0 and 7.5 grams.

In a particularly preferred embodiment, the present composition contains between 0.1 and 1.2 gram soluble indigestible oligosaccharides per 100 ml liquid product, preferably between 0.7 and 0.9 gram/100 ml.

The term "indigestible oligosaccharides" and "indigestible carbohydrate" as used in the present invention refers to oligosaccharides/carbohydrate which are not or only partially digested in the intestine by the action of acids or digestive enzymes present in the human upper digestive tract (small intestine and stomach) but which are fermented by the human intestinal flora.

The term "soluble" as used herein, when having reference to a polysaccharide, fibre or oligosaccharide, means that the substance is at least 50% soluble according to the method described by L. Prosky et al., J. Assoc. Off. Anal. Chem. 71, 1017-1023 (1988).

Human milk also contains galactose-based oligosaccharides. In order to have a close resemblance with human milk, the present composition preferably includes at least a galactose-based indigestible oligosaccharide which is at least highly similar to the galactose-based oligosaccharides as present in human milk. The term galactose-based indigestible oligosaccharide as used herein refers to an indigestible saccharide, wherein at least 30 % of the saccharide units are galactose units, preferably at least 50 %, more preferably at least 60%. Preferably the saccharides of the galactose-based oligosaccharide are β-linked, as is the case in human milk.
Preferably the galactose-based indigestible oligosaccharide is selected from the group consisting of transgalactooligosaccharide, galactooligosaccharide, lacto-N-tetraose (LNT) and lacto-N-neotetraose (neo-LNT). In a particularly preferred embodiment the present method comprises the administration of transgalactooligosaccharide ([galactose]ₙ-glucose; wherein n is an integer between 1 and 60, i.e. 2, 3, 4, 5, 6, ..... 59 ,60; preferably n is selected from 2, 3, 4, 5, 6, 7, 8, 9, or 10). Transgalactooligosaccharides (TOS) are for example sold under the trademark Vivinal™ (Borculo Domo Ingredients, Netherlands). Preferably the saccharides of the transgalactooligosaccharides are β-linked.

The present composition preferably comprises 0.1 to 12 grams of the galactose-based oligosaccharides per 100 gram dry weight of the liquid composition, preferably between 0.5 and 8 grams, more preferably between 1.0 and 7.5 grams.

In a further preferred embodiment, the present composition contains indigestible soluble oligosaccharides which have a high resemblance with fruit, cereal and/or vegetable soluble indigestible oligosaccharides. These oligosaccharides are hereinafter referred to "non-galactose based oligosaccharides". Preferably the present composition contains an oligosaccharides selected from the group consisting of indigestible dextrins, xylooligosaccharides, arabinooligosaccharides, glucooligosaccharides, mannooligosaccharides, isomalto-oligosaccharide and fructopolysaccharide. Because fructopolysaccharide widely occurs in solid foods (e.g. onion, banana, artichokes) the present composition preferably comprises fructopolysaccharide.
The term "fructopolysaccharide" as used herein refers to a polysaccharide carbohydrate comprising a chain of at least 3 β-linked fructose units, with a DP between 3 and 300, preferably between 20 and 150. Preferably inulin is used. Inulin is available under the tradename "Raftilin HP®", (Orafti). The term "inulin" is used herein to refer to glucose-terminated fructose chains with at least 90% fructose units having a DP between 10 and 300. Inulin can be described as GF_{n'} wherein G represents a glucosyl unit, F represents a fructosyl unit and n is the number of fructosyl units linked to each other, n being 9 or more. A small part of the inulin molecules, however, may have no terminal glucose unit, due to hydrolysis during processing. The average DP of the fructopolysaccharide is preferably at least 15, more preferably at least 20 or more, up to 300. In inulin the fructose units are linked with a β(2→ 1) linkage.
Indigestible polydextrins refer to digestion-resistant (malto)dextrins or digestion-resistant polydextrose which have a DP of 10 to 50, preferably between 10 and 20. Indigestible polydextins are at least 75% indigestible, preferably at least 90 % indigestible These indigestible polydextrins are preferably produced by a combination of hydrolysis and transglucosidation reactions. In a preferred embodiment, the indigestible polydextrins comprise α(1→4), α(1→6) glucosidic bonds and 1→2 and 1→3 linkages Indigestible polydextrins are for example available under the tradename "Fibersol 2®" from Matsutami Inductries or Litesse® from Danisco.

Optimally, the present liquid nutrition comprises both the galactose-based oligosaccharides (for the human milk resemblance) and the non-galactose based oligosaccharide (for the preparation of solid foods). Because the infant consuming the present liquid product is young, the present composition preferably has a high content of galactose based oligosaccharides. Preferably the weight ratio galactose based oligosaccharides: non-galactose based oligosaccharides is 100:1 to 1:2, preferably 50:1 to 1:1. Preferably the composition contains, per 100 ml liquid product, between 0.1 and 0.7 gram transgalactooligosaccharides; and between 0.01 and 0.3 gram inulin.

According to a further preferred embodiment, the present composition contains insoluble, indigestible fibers, preferably in an amount below 1 gram per 100 ml, preferably between 0.1 and 0.5 gram per 100 ml.

### Protein

With few exceptions, infants normally receive solely animal proteins (e.g. human milk protein or cow's milk protein) in the first few months after birth. Exceptions are for example infants suffering from cow's milk allergy that receive soy based formula's. The present transition nutrition preferably contains protein, even more preferably a combination of animal protein and cereal protein, wherein the cereal protein comprises preferably at least one protein selected from the group consisting of rice protein, com protein, wheat protein and oat protein. The present liquid composition preferably contains between 1.5 and 3 g protein per 100 ml, preferably between 2 and 3 grams. The weight ratio animal milk protein: cereal protein is preferably 1:1 to 10:1.

### Infant nutrition.

The present composition is particularly suitable for use as a nutritional composition for providing nutrition to an infant with the age between 4 and 18 months. Preferably, the present composition is bottle fed (orally through a teat) to the infant. In order to provide sufficient nutrition to the infant, the present composition preferably contains protein, carbohydrate and fat, more preferably between 7 and 12.5 en% protein, between 40 and 75 en% carbohydrate and between 25 and 40 en% fat.

The present composition preferably has an osmolality between 300 and 550 mOsm/kg water to prevent intestinal discomfort and disturbance. The caloric density of the present nutritional composition is preferably greater than the caloric density of human milk or infant milk formula. Hence the caloric density is preferably between 0.75 and 1.5 kcal/ml. The present composition preferably has a viscosity, which is somewhat above that of human milk, i.e. between 20 and 150 mPa.s, preferably between 40 and 100 mPas. The viscosity may be determined using a Carri-Med CSL rheometer. The used geometry is of conical shape (6 cm 2 deg acrylic cone) and the gap between plate and geometry is set on 55 µm. A logarithmic continuous ramp shear rate is used from 1 to 1000 s⁻¹ in 2 minutes. The rheometer's thermostat is set on 20°C.

The present composition is preferably provided as a packaged product containing between 150 and 550 ml of the present liquid composition in ready-to-use form. The term "ready-to-use form" means that the composition does not require admixture of components such as water, milk or sugar prior to administration to the infant. In order to reduce the risk for microbial contamination, the packaged products preferably contain one or two serving sizes, i.e. contain between 150 and 550 ml of the present liquid product per package. Most preferably the present liquid composition is packaged per serving of between 175 and 275 ml. For providing nutrition to an infant, the liquid composition of the packaged product according to the present invention is transferred to bottle suitable for carrying a teat. Said liquid composition is preferably heated in the bottle to a temperature between 30 and 38°C, followed by connecting the teat to the bottle and feeding the liquid composition to the infant through a teat.

Generally bottle-feeding an infant takes about 30 minutes. Hence, the viscosity of the present composition preferably remains relatively constant during this time interval. Hence, preferably the viscosity of the present composition does not exceed 150% of the viscosity of the ready-to-use composition at room temperature before heating, during the 30 minute interval starting when the present liquid composition is heated to 37°C.

### Fatty acids

In still a further embodiment, the present composition preferably contains long chain polyunsaturated fatty acids, to prove a further acquaintance to ingredients in solid food, and more importantly, provide the infant with appropriate components for a proper neurological development.

Preferably the present composition contain between 0.05 and 5 wt.% docosahexaenoic acid (DHA, n3) based on the total weight of lipids and/or between 0.05 and 5 wt.% arachidonic acid (AA, n3) based on the total weight of the lipids. The present composition preferably comprises at least 0.1 wt.%, preferably at least 0.25 wt, more preferably at least 0.5 wt.%, even more preferably at least 0.75 wt.% long chain polyunsaturated fatty acid (LC-PLTFA) with 20 and 22 carbon atoms based on the total fat content. More preferably, the present composition comprises AA, EPA (eicosapentaenoic acid, n3) and DHA, wherein the weight ratio AA/DHA preferably is above 0.25, preferably above 0.5, even more preferably above 1. The ratio is preferably below 25. The weight ratio AA/EPA is preferably between 1 and 100, more preferably between 5 and 20.

### EXAMPLES

### Example 1: Cereal milk for infants

Milk part: Skimmed milk (680 kg); Rape seed/sun flower oil (17 kg); Palm oil (10 kg); Coconut oil (4 kg); transgalactooligosaccharides (15.19 kg Elix' or ™(Borculo Domo Ingredients, Netherlands); including 6.7 kg transgalactooligosaccharides); Inulin (0.78 kg).

Cereal part: Hydrolyzed rice flour (33kg); Pre-cooked rice flour (15 kg); Pre-cooked corn flour (15 kg); Pre-cooked waxy corn starch (10 kg); Sucrose (52 kg); Glucidex® 19 IT (2.4 kg; Roquette, Lestrem, France)

### Example 2: Cereal milk for infants with honey

### - Milk part:

| | |
|---|---|
| Skimmed milk | 621 kg |
| Rape seed/sun flower oil | 20 kg |
| Palm oil | 13 kg |
| Coconut oil | 4 kg |
| Elix'or™ (Borculo Domo Ingredients, Netherlands) | 15.19kg |
| Inulin (Raftilin HP®, Orafti BE) | 0.78 kg |

### - Cereal part:

| | |
|---|---|
| Hydrolysed wheat flour | 58 kg |
| Honey (UHT-treated) | 24 kg |
| Pre-cooked waxy corn starch | 13 kg |
| Sucrose | 32 kg |
| Glucidex® 19 IT | 12 kg |

### Example 3: Milk and Cereal with honey

### Milk part:

| | |
|---|---|
| Skimmed milk | 483 kg |
| Lactose | 49 kg |
| Rape seed/sun flower oil | 27 kg |
| Corn oil | 1 kg |
| Elix'or™ (Borculo Domo Ingredients, Netherlands) | 15.19kg |
| Inulin (Raftilin HP, Orafti BE) | 0.78 kg |

### Cereal part:

| | |
|---|---|
| Hydrolysed wheat flour | 38 kg |
| Honey (UHT-treated) | 22 kg |
| Pre-cooked waxy corn starch | 20 kg |

### Example 4: Milk & Cereal with cacao

### - Milk part:

| | |
|---|---|
| Skimmed milk | 483 kg |
| Lactose | 49 kg |
| Rape seed/sun flower oil | 26 kg |
| Corn oil | 1 kg |
| Galactooligosaccharides | 15.19 kg |
| Inulin | 0.78 kg |

### - Cereal part:

| | |
|---|---|
| Hydrolyzed rice flour | 17 kg |
| Pre-cooked rice flour | 10 kg |
| Pre-cooked corn flour | 10 kg |
| Sucrose | 11 kg |
| Cacao | 8 kg |
| Carrageen | 0.1 kg |
| Glucidex 19 | 14 kg |
| Pre-cooked waxy corn starch | 6 kg |

## Claims

1. Liquid composition suitable for feeding to an infant with a viscosity 20-150 mPas containing:
a. a digestible carbohydrate fraction containing:
- less than 20 wt.% monosaccharide based on total weight of digestible carbohydrate if the composition includes honey or less than 15 wt.% monosaccharide based on total weight of digestible carbohydrate;
- between 20 and 70 wt.% disaccharide based on total weight of digestible carbohydrate, wherein at least 10 wt.% based on total weight of digestible carbohydrate is provided by lactose;
- between 10 and 30 wt.% digestible oligosaccharide with a degree of polymerisation (DP) of 3 - 250;
- between 10 and 40 wt.% precooked material selected from the group consisting of precooked cereal starch and precooked cereal flour, based on total weight of the digestible carbohydrate;
- a weight ratio lactose/digestible cereal-derived carbohydrate between 0.25 and 2.5; and
b. an indigestible carbohydrate fraction containing at least 50 wt.% soluble indigestible oligosaccharide with a degree of polymerisation (DP) between 2 and 100.

2. Composition according to any one of the preceding claims, wherein the protein provides between 7 and 12.5 %, the carbohydrate between 40 and 75 % and the fat between 25 and 40 % of the total caloric content.

3. Composition according to any one of the preceding claims, wherein the weight ratio animal protein: cereal protein 1:1 to 10:1.

4. Composition according to any one of the preceding claims, wherein the composition contains precooked cereal flour.

5. Composition according to any one of the preceding claims, further comprising insoluble indigestible carbohydrate.

6. Composition according to any one of the preceding claims, comprising galactose-based oligosaccharide and fructopolysaccharide.

7. Composition according to any one of the preceding claims, wherein the precooked material has a water holding capacity between 2 and 10 gram water/gram dry matter precooked material.

8. Packaged product containing between 150 and 550 ml of the liquid composition according to any one of claim 1-7 in ready-to-use form.

9. Use of a composition according to any one of claim 1-8 for the manufacture of a nutritional composition for providing nutrition to an infant with the age between 4 and 18 months.

10. Process for the manufacture of a composition according to any one of claims 1-7, comprising admixing lactose; precooked material selected from the group consisting of precooked cereal starch and precooked cereal flour; digestible oligosaccharide with a degree of polymerisation (DP) of 3 - 250; and indigestible oligosaccharide.

## Patentansprüche

1. Flüssige Zusammensetzung, geeignet zur Ernährung eines Säuglings, mit einer Viskosität von 20 - 150 mPas, enthaltend:
a. einen verdaulichen Kohlenhydratanteil, enthaltend:
- weniger als 20 Gew-% Monosaccharid basierend auf dem Gesamtgewicht von verdaulichem Kohlenhydrat, wenn die Zusammensetzung Honig enthält, oder weniger als 15 Gew-% Monosaccharid basierend auf dem Gesamtgewicht von verdaulichem Kohlenhydrat;
- zwischen 20 und 70 Gew-% Disaccharid basierend auf dem Gesamtgewicht von verdaulichem Kohlenhydrat, wobei mindestens 10 Gew-% basierend auf dem Gesamtgewicht von verdaulichem Kohlenhydrat durch Lactose bereitgestellt werden;
- zwischen 10 und 30 Gew-% verdauliches Oligosaccharid mit einem Polymerisationsgrad (DP) von 3 - 250;
- zwischen 10 und 40 Gew-% vorgekochtes Material ausgewählt aus der Gruppe bestehend aus vorgekochter Getreidestärke und vorgekochtem Getreidemehl, basierend auf dem Gesamtgewicht von verdaulichem Kohlenhydrat;
- ein Gewichtsverhältnis von Lactose zu verdaulichem von Getreide stammendem Kohlenhydrat zwischen 0,25 und 2,5; und
b. einen unverdaulichen Kohlenhydratanteil, enthaltend mindestens 50 Gew-% lösliches unverdauliches Oligosaccharid mit einem Polymerisationsgrad (DP) zwischen 2 und 100.

2. Zusammensetzung nach einem der vorhergehenden Ansprüche, wobei Protein zwischen 7 und 12,5%, Kohlenhydrat zwischen 40 und 75% und Fett zwischen 25 und 40% des Gesamtkaloriengehalts liefert.

3. Zusammensetzung nach einem der vorhergehenden Ansprüche, wobei das Gewichtsverhältnis von tierischem Protein zu Getreideprotein 1:1 bis 10:1 ist.

4. Zusammensetzung nach einem der vorhergehenden Ansprüche, wobei die Zusammensetzung vorgekochtes Getreidemehl enthält.

5. Zusammensetzung nach einem der vorhergehenden Ansprüche, des Weiteren unlösliches unverdauliches Kohlenhydrat umfassend.

6. Zusammensetzung nach einem der vorhergehenden Ansprüche, umfassend auf Galactose basierendes Oligosaccharid und Fructopolysaccharid.

7. Zusammensetzung nach einem der vorhergehenden Ansprüche, wobei das vorgekochte Material eine wasserbindende Kapazität zwischen 2 und 10 g Wasser/Gramm Trockenmasse des vorgekochten Materials hat.

8. Abgepacktes Produkt, enthaltend zwischen 150 und 550 ml der flüssigen Zusammensetzung nach einem der Ansprüche 1 bis 7 in gebrauchsfertiger Form.

9. Verwendung einer Zusammensetzung nach einem der Ansprüche 1 bis 8 für die Herstellung einer Nährstoffzusammensetzung zur Bereitstellung von Nahrung für einen Säugling im Alter zwischen 4 und 18 Monaten.

10. Verfahren zur Herstellung einer Zusammensetzung nach einem der Ansprüche 1 bis 7, umfassend das Mischen von Lactose, vorgekochtem Material ausgewählt aus der Gruppe bestehend aus vorgekochter Getreidestärke und vorgekochtem Getreidemehl, verdaulichem Oligosaccharid mit einem Polymerisationsgrad (DP) von 3 - 250, und unverdaulichem Oligosaccharid.

## Revendications

1. Composition liquide appropriée pour l'alimentation d'un nouveau-né ayant une viscosité de 20 à 150 mPas contenant :
a. une fraction de glucide facile à digérer contenant :
- moins de 20 % en poids de monosaccharide sur la base du poids total de glucide facile à digérer si la composition comprend du miel ou moins de 15 % en poids de monosaccharide sur la base du poids total de glucide facile à digérer ;
- entre 20 et 70 % en poids de disaccharide sur la base du poids total de glucide facile à digérer, dans laquelle au moins 10 % en poids sur la base du poids total de glucide facile à digérer est du lactose ;
- entre 10 et 30 % en poids d'oligosaccharide facile à digérer ayant un degré de polymérisation (DP) de 3 à 250 ;
- entre 10 et 40 % en poids de matière précuite choisie dans le groupe constitué de l'amidon de céréales précuites et de la farine de céréales précuites, sur la base du poids total de glucide facile à digérer ;
- un rapport en poids lactose/glucide dérivé de céréales facile à digérer compris entre 0,25 et 2,5 ; et
b. une fraction de glucide non facile à digérer contenant au moins 50 % en poids d'oligosaccharide non facile à digérer soluble ayant un degré de polymérisation (DP) compris entre 2 et 100.

2. Composition selon l'une quelconque des revendications précédentes, dans laquelle la protéine constitue de 7 à 12,5 %, le glucide de 40 à 75 % et la graisse de 25 à 40 % de la teneur calorique totale.

3. Composition selon l'une quelconque des revendications précédentes, dans laquelle le rapport en poids protéine animale : protéine de céréales est de 1 : 1 à 10:1.

4. Composition selon l'une quelconque des revendications précédentes, dans laquelle la composition contient de la farine de céréales précuites.

5. Composition selon l'une quelconque des revendications précédentes, comprenant en outre un glucide non facile à digérer insoluble.

6. Composition selon l'une quelconque des revendications précédentes, comprenant un oligosaccharide à base de galactose et un fructopolysaccharide.

7. Composition selon l'une quelconque des revendications précédentes, dans laquelle la matière précuite a une capacité de rétention d'eau comprise entre 2 et 10 grammes d'eau/gramme de matière sèche de la matière précuite.

8. Produit emballé contenant de 150 à 550 mL de la composition liquide selon l'une quelconque des revendications 1 à 7 sous une forme prête à l'emploi.

9. Utilisation d'une composition selon l'une quelconque des revendications 1 à 8 pour la fabrication d'une composition nutritionnelle destinée à la nutrition d'un nouveau-né âgé de 4 à 18 mois.

10. Procédé de fabrication d'une composition selon l'une quelconque des revendications 1 à 7, comprenant le mélange de lactose ; de matière précuite choisie dans le groupe constitué de l'amidon de céréales précuites et de la farine de céréales précuites ; d'oligosaccharide facile à digérer ayant un degré de polymérisation (DP) de 3 à 250 ; et d'oligosaccharide non facile à digérer.
